# EUROPÄISCHE PATENTSCHRIFT

(11) **EP 3 541 667 B1**
(45) Veröffentlichungstag und Bekanntmachung des Hinweises auf die Patenterteilung: **09.12.2020**
(21) Anmeldenummer: 17777837.0
(22) Anmeldetag: 22.09.2017
(51) Int. Cl.: B60R 21/0132, G01P 21/00

(54) **VERFAHREN UND VORRICHTUNG ZUM ERKENNEN EINES ZUSAMMENSTOSSES UND DESSEN ABGRENZUNG ZU REGULÄREM FAHRBETRIEB**
METHOD AND DEVICE FOR DETECTING A CRASH AND DISCRIMINATING IT FROM NORMAL DRIVING
PROCÉDÉ ET DISPOSITIF POUR DÉTECTER UN IMPACT ET LE DIFFÉRENCIER DE LA CONDUITE NORMALE

(30) Priorität: 16.11.2016 DE 102016222490
(43) Veröffentlichungstag der Anmeldung: 25.09.2019
(73) Patentinhaber: Robert Bosch GmbH, 70442 Stuttgart (DE)
(72) Erfinder: KINDSVATER, Anne-Helene, 70597 Stuttgart (DE); WESTENDORF, Andreas, 31137 Hildesheim (DE); HASERT, Matthias, 71640 Ludwigsburg (DE)
(86) Internationale Anmeldenummer: PCT/EP2017/074002
(87) Internationale Veröffentlichungsnummer: WO 2018/091175

(56) Entgegenhaltungen:
- EP-A1- 2 487 659
- WO-A1-2013/096908
- WO-A2-2009/068983
- DE-A1-102011 113 196
- US-A1- 2004 000 992
- US-A1- 2012 221 276

## Beschreibung

Die vorliegende Erfindung betrifft ein Verfahren zum Erkennen eines Zusammenstoßes. Die vorliegende Erfindung betrifft darüber hinaus eine entsprechende Telematik-Einheit sowie ein entsprechendes Computerprogramm, Speichermedium und Fahrzeug.

### Stand der Technik

In der Fahrzeugsicherheit hinlänglich bekannt sind sogenannte Crash- oder Aufprallsensoren, die in Kraftfahrzeugen verwendet werden, um verschiedenartige Zusammenstöße des jeweiligen Fahrzeuges zu erkennen. Ein fest verbautes Messgerät beispielsweise sendet bei einer beträchtlichen Erschütterung über den Bus des jeweiligen Fahrzeuges einen elektrischen Impuls an verschiedene weitere Steuergeräte, die wiederum verschiedene Insassenschutzsysteme aktivieren können. Je nach Ausstattungsniveau zählen hierzu etwa Airbags, Gurtkraftbegrenzer, Gurtstraffer und Überrollbügel des Fahrzeuges. Crashsensoren einfacher Bauart erkennen dabei nur das Schadensereignis als solches und aktivieren die besagten Insassenschutzsysteme, sobald ein vorgegebener Schwellenwert der Fahrzeugverzögerung überschritten wird, während fortschrittlichere Messgeräte in der Lage sind, auch die Aufprallschwere zu erkennen.

Der Stand der Technik umfasst ebenfalls fest verbaute oder nachrüstbare Telematik-Einheiten für Kraftfahrzeuge, die derartige Sensorik umfassen und selbsttätig beispielsweise an einen Fahrzeugflottenbetreiber oder Fuhrpark übermitteln.

So wird beispielsweise in DE 101 38 764 C1 eine Anordnung zur Erkennung eines Frontalaufpralls bei einem Fahrzeug vorgeschlagen, bei dem als Plausibilitätssensor wenigstens ein Front-Sensor verwendet wird, der ein Plausibilitätssignal für einen im Steuergerät angeordneten Aufprallsensor liefert. Der Front-Sensor ist ein Beschleunigungssensor, von dem sowohl das Beschleunigungssignal als auch das davon abgeleitete Geschwindigkeitssignal für die Plausibilisierung untersucht wird. Die Ergebnisse dieser Untersuchung werden ODER-verknüpft, um ein Plausibilitätssignal zu erzeugen. In einer Weiterbildung ist vorgesehen, das Plausibilitätssignal für eine vorgegebene Zeit im Steuergerät zu speichern. Dies ist insbesondere bei einer Zerstörung des Front-Sensors für eine erhöhte Sicherheit von Interesse.

In der EP2487659A wird ein Bewertungssystem eines Risikoindikators des Fahrzeugführers offenbart, welches einen Beschleunigungsmesser verwendet und Beschleunigungs- und Verzögerungswerte eines Fahrzeuges erfasst und diese an ein Betriebszentrum zur Berechnung eines Risikowertes sendet.

### Offenbarung der Erfindung

Die Erfindung stellt ein Verfahren zum Erkennen eines Zusammenstoßes eines Fahrzeugs, eine entsprechende Telematik-Einheit sowie ein entsprechendes Computerprogramm, Speichermedium und Fahrzeug gemäß den unabhängigen Ansprüchen bereit.

Dem erfindungsgemäßen Ansatz liegt hierbei die Erkenntnis zugrunde, dass im Falle konventioneller Messgeräte eine Auswertung der Beschleunigungswerte bezüglich der Gerätekoordinatenachsen zumeist ohne Ansehung der Einbaulage des Gerätes erfolgt. Eine Ausführungsform der Erfindung hingegen berücksichtigt drei Aspekte: Erstens treten im Fahrbetrieb eines Straßenfahrzeuges mitunter starke Beschleunigungen in dessen Gier-, Hoch- oder Vertikalachse (z) auf, die durch Schlaglöcher verursacht werden. Zweitens finden schwere Unfälle fahrdynamisch typischerweise in der von der Wank- oder Längsachse (x) und der Nick- oder Querachse (y) des Fahrzeuges aufgespannten Ebene (x-y) statt. Drittens schließlich sind für dessen Insassen besonders Unfälle im Seitenbereich des Fahrzeuges gefährlich, die durch eine Beschleunigung entlang der Nickachse gekennzeichnet sind.

Ein Vorzug der vorgeschlagenen Telematik-Einheit liegt demgemäß in der vorteilhaften Erkennung und Bewertung fahrzeugbezogener Beschleunigungen schon bei einer groben Lageerkennung der Telematik-Einheit. Eine bevorzugte Ausführungsform der Erfindung ermöglicht es auf diese Weise, ohne Anbindung an das Fahrzeugbussystem Unfälle zu detektieren.

Eine erfindungsgemäße Telematik-Einheit gestattet somit die genaue Bewertung von Beschleunigungswerten, ohne dass die genaue Lage der Einheit durch eine diesbezügliche Information seitens ihres Betreibers vorher bekannt sein oder dass eine Softwarevorgabe durch den Betreiber und/oder Hersteller erfolgen muss.

Wird durch eine erfindungsgemäße Telematik-Einheit ein Unfall detektiert, so kann beispielsweise ein Notruf über die Telematik-Einheit abgesendet werden. Die Telematik-Einheit weist dazu eine Kommunikationseinrichtung auf, um mit einer Rettungszentrale in Verbindung zu treten. Die Kommunikationseinheit kann über eine kabellose Verbindung mit einer Rettungszentrale in Form einer stationären Recheneinheit (Computer) oder mobilen Recheneinheit (z.B. Handy, Tablet) verbunden sein. In diesem Fall erfolgt der Datenaustausch beispielsweise über W-LAN, drahtlose Mobilfunktechnologie oder Bluetooth mit der Rettungszentrale. Die Telematikeinheit detektiert einen Unfall, wenn anhand der Bewertung der Fahrzeugbeschleunigung einen Zusammenstoß erkannt wird.

Durch die in den abhängigen Ansprüchen aufgeführten Maßnahmen sind vorteilhafte Weiterbildungen und Verbesserungen des im unabhängigen Anspruch angegebenen Grundgedankens möglich. So kann vorgesehen sein, dass die Gewichtung der Beschleunigung mit der Einbaulagegüte korreliert. Diese Ausgestaltung ermöglicht es der Telematik-Einheit, unabhängig von Lage und Einbauort im Fahrzeug besser zwischen Unfallereignissen und sonstigen Störgrößen - beispielsweise Schlaglöchern bei einer dynamischen Schlechtwegüberfahrt - zu unterscheiden.

Ein fest verbautes Messgerät beispielsweise sendet bei einer beträchtlichen Erschütterung über den Bus des jeweiligen Fahrzeuges einen elektrischen Impuls an verschiedene weitere Steuergeräte, die wiederum verschiedene Insassenschutzsysteme aktivieren können.

Gemäß einem weiteren Aspekt kann vorgesehen sein, dass die Gewichtung der Beschleunigung entlang der Querachse ebenfalls in Abhängigkeit der Lagegüte erfolgt. Eine derartige Ausführungsform gestattet es, unabhängig von der Lage und dem Einbauort im Fahrzeug besser die potentielle Gefahr für Insassen abzuschätzen.

### Kurze Beschreibung der Zeichnungen

Ausführungsbeispiele der Erfindung sind in den Zeichnungen dargestellt und in der nachfolgenden Beschreibung näher erläutert. Es zeigt:
Figur 1 das Aktivitätsdiagramm eines Verfahrens gemäß einer ersten Ausführungsform.
Figur 2 die perspektivische Ansicht eines Straßenfahrzeuges gemäß einer zweiten Ausführungsform.
Figur 3 einen Funktionsgraphen.

### Ausführungsformen der Erfindung

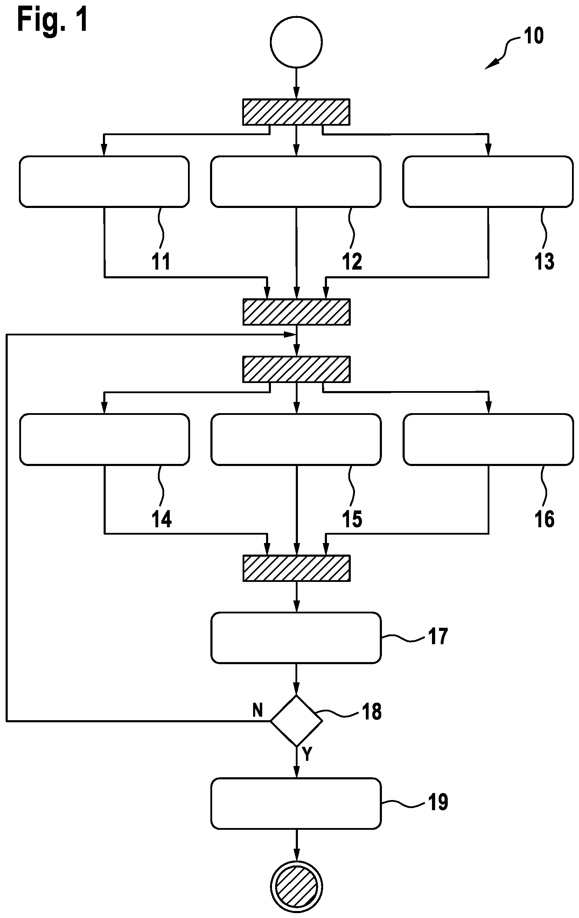

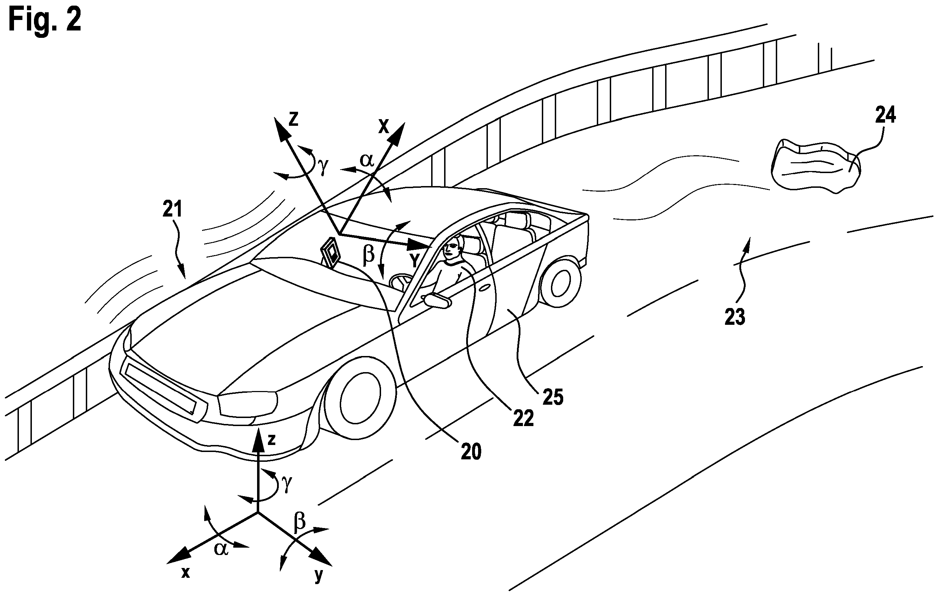

Figur 1 illustriert die grundlegenden Schritte eines erfindungsgemäßen Verfahrens (10) zur Aufprallerkennung in einem Fahrzeug (25), die nunmehr anhand des in Figur 2 dargestellten Anwendungsfalles erläutert seien. Das Verfahren (10) wird hierbei von einer nachgerüsteten Telematik-Einheit (20) des Fahrzeuges (25) ohne Verbindung zu dessen - zeichnerisch nicht dargestelltem - Bussystem ausgeführt. Gleichwohl lässt sich ein entsprechendes Verfahren (10) beispielsweise in Software oder Hardware oder in einer Mischform aus Software und Hardware auch in einem fest verbauten Steuer- oder anderweitigen Messgerät (20) umsetzen, ohne den Rahmen der Erfindung zu verlassen.

Die Telematik-Einheit (20) misst (Aktionen 11, 12, 13) hierzu in zunächst herkömmlicher Weise periodisch ihre Beschleunigung bezüglich ihrer eigenen Gerätekoordinatenachsen (X, Y, Z). Einschlägige Messfühler sind dem Fachmann als Beschleunigungssensoren, Beschleunigungsmesser, Accelerometer, Akzelerometer, B-Messer oder G-Sensoren vertraut. Zudem nimmt die Telematik-Einheit (20) eine Erkennung ihrer Einbaulage vor (Aktionen 14, 15, 16). Für diesen Zweck geeignete integrierte Gyro- und Beschleunigungssensoren lassen sich beispielsweise als mikroelektromechanische Systeme (MEMS) realisieren. Der Bestimmungsrad der Einbaulage der Gerätekoordinaten (X,Y,Z) in Bezug zu dem Fahrzeugkoordinatensystem (x, y, z) definiert hierbei gleichsam die Einbaulagegüte, anhand derer sich die Sensitivität oder Empfindlichkeit der Einheit (20) auf bestimmte Beschleunigungsanteile adaptieren lässt. Die gemäß Figur 2 definierten Einbaulagewinkel (*α*, *β, γ*) stellen somit den Bezug zwischen Gerätekoordinaten und Fahrzeugkoordinaten dar.

In Abhängigkeit der Einbaulagegüte vermag die Telematik-Einheit (20) nun eine differenzierte Bewertung der Beschleunigungen vorzunehmen (Aktion 17). Sofern eine gewisse Einbaulagegüte (definiert über eine Gütezahl GZ) erreicht wird, "greift" die Gewichtung und bewirkt eine Reduzierung oder Verstärkung der als Eingangsgröße dienenden Beschleunigung. Es besteht somit die Möglichkeit, die Gewichtung in Abhängigkeit der Gütezahl (GZ) vorzunehmen.

Hierzu ermittelt die Telematik-Einheit (20) die Beschleunigung entlang jeder der Gerätekoordinatenachsen (X, Y, Z) und bezieht diese auf Basis der ermittelten Einbaulagewinkel auf die Fahrzeugkoordinaten (x, y, z). Die Gewichtung auf Basis der Gütezahl GZ erfolgt dann auf die jeweilige Fahrzeugbeschleunigung die dann nachfolgend durch einen Algorithmus bewertet werden. Wurde die Einheit (20) beispielsweise in einer nahezu aufrechten Lage im Fahrzeug (25) befestigt, so stimmt ihre Hochachse (Z) weitgehend mit der Gierachse (z) des Fahrzeuges (25) überein; beide Achsen (Z, z) stehen in einem vergleichsweise kleinen Winkel (*γ*) zueinander. Da somit eine Z-Beschleunigung der Telematik-Einheit (20) typischerweise durch Schlaglöcher (24) oder anderweitige Unebenheiten des Fahrweges (23) verursacht wird, reduziert die Einheit (20) fortan die Gewichtung dieser Komponente und "dämpft" somit deren Einfluss auf die Situationsbewertung.

Diese stetige Funktion lässt sich über eine Gütezahl (GZ) realisieren *g_{Z}*(*GZ*), wobei die Gütezahl aus der Lagebestimmung abgeleitet ist. Die Gütezahl korreliert mit dem Einfluss auf die jeweilige Beschleunigung. Je genauer die Lage der Telematikeinheit bekannt ist umso stärker ist der Einfluss auf die jeweilige Beschleunigung.

Da sich die z-Achse des Fahrzeugs durch die Erdbeschleunigung schnell ermittelt lässt, eignet sich dieses Verfahren besonders für die gewichtete Bewertung der z-Achse des Fahrzeugs. Somit können reale Unfallereignissen klarer zu sonstigen Störgrößen - beispielsweise Schlaglöcher abgegrenzt werden.

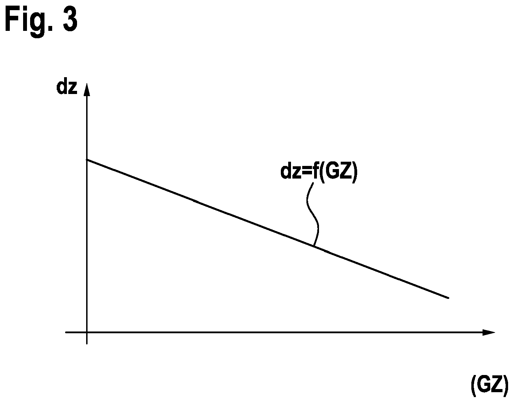

Figur 3 verdeutlicht ein Beispiel der Beziehung g(z)=gz^{∗}dz, wobei dz=f(GZ).

## Patentansprüche

1. Verfahren (10) zum Erkennen eines Zusammenstoßes eines Fahrzeuges (25) durch ein mit dem Fahrzeug (25) starr verbundenes Messgerät (20), **gekennzeichnet durch** folgende Merkmale:
- bezüglich mehrerer auf das Messgerät (20) bezogener Gerätekoordinatenachsen (X, Y, Z) wird jeweils eine Beschleunigung des Messgerätes (20) gemessen (11, 12, 13),
- bezüglich mehrerer auf das Fahrzeug (25) bezogener Fahrzeugkoordinatenachsen (x, y, z) wird jeweils ein Einbaulagewinkel (*α*, *β, γ*) des Messgerätes (20) errechnet und/oder gemessen (14, 15, 16),
- anhand der Einbaulagewinkel (*α*, *β, γ*) wird eine Fahrzeugbeschleunigung entlang der Fahrzeugkoordinatenachsen (x, y, z) ermittelt und eine Bewertung der Beschleunigungen vorgenommen (17),
- ein Bestimmungsgrad der Einbaulage wird durch das Gerät ermittelt und für eine Gewichtung der Beschleunigungen herangezogen und
- anhand der Bewertung (18, Y) der Fahrzeugbeschleunigung wird der Zusammenstoß erkannt (19).

2. Verfahren (10) nach Anspruch 1,
**gekennzeichnet durch** folgendes Merkmal:
- zumindest die Beschleunigungen werden wiederholt, vorzugsweise periodisch, gemessen (11, 12, 13).

3. Verfahren (10) nach Anspruch 1 oder 2,
**gekennzeichnet durch** folgende Merkmale:
- anhand der Einbaulagewinkel (*α*, *β, γ*) oder einer Gütezahl (GZ) wird
bezüglich jeder Gerätekoordinatenachse (X, Y, Z) unter den Gerätekoordinatenachsen (X, Y, Z) eine Gewichtung (dz, dx, dy) der Beschleunigung entlang der Gerätekoordinatenachse (X, Y, Z) angepasst und
- die Bewertung (17) der Beschleunigungen erfolgt abhängig von deren Gewichtungen (dz, dy, dx)

4. Verfahren (10) nach Anspruch 3,
**gekennzeichnet durch** folgende Merkmale:
- jeder Gerätekoordinatenachse (X, Y, Z) unter den Gerätekoordinatenachsen (X, Y, Z) ist eine Fahrzeugkoordinatenachse (x, y, z) unter den Fahrzeugkoordinatenachsen (x, y, z) zugeordnet und
- die Gewichtung (dz, dy, dx) der Beschleunigung entlang jeder Gerätekoordinatenachse (X, Y, Z) ist eine stetige Funktion des Einbaulagewinkels (*α*, *β, γ*) oder eine stetige Funktion der Gütezahl
bezüglich der der Gerätekoordinatenachse (X, Y, Z) zugeordneten Fahrzeugkoordinatenachse (x, y, z).

5. Verfahren (10) nach Anspruch 4,
**gekennzeichnet durch** folgende Merkmale:
- die Gerätekoordinatenachsen (X, Y, Z) umfassen eine Hochachse (Z),
- die Fahrzeugkoordinatenachsen (x, y, z) umfassen eine Gierachse (z) und
- die Gewichtung (dz) der Beschleunigung entlang der Hochachse (Z) korreliert mit dem Einbaulagewinkel (y) oder der Gütezahl (GZ)
bezüglich der Gierachse (z).

6. Verfahren (10) nach einem der Ansprüche 4 oder 5,
**gekennzeichnet durch** folgende Merkmale:
- die Gerätekoordinatenachsen (X, Y, Z) umfassen eine eine Querachse (Y),
- die Fahrzeugkoordinatenachsen (x, y, z) umfassen eine eine Nickachse (y) und
- die Gewichtung (dy) der Beschleunigung entlang der Querachse (Y) korreliert mit dem Einbaulagewinkel (*β*) oder der Gütezahl (GZ)
bezüglich der Nickachse (y).

7. Verfahren (10) nach einem der Ansprüche 4 oder 5,
**gekennzeichnet durch** folgende Merkmale:
- die Gerätekoordinatenachsen (X, Y, Z) umfassen eine Längsachse (X)
- die Fahrzeugkoordinatenachsen (x, y, z) umfassen eine Wankachse (x)und
- die Gewichtung (dx) der Beschleunigung entlang der Längsachse (X) korreliert mit dem Einbaulagewinkel (*α*) oder der Gütezahl (GZ)
bezüglich der Wankachse (x).

8. Computerprogramm, welches eingerichtet ist, das Verfahren (10) nach einem der Ansprüche 1 bis 7 auszuführen.

9. Maschinenlesbares Speichermedium, auf dem das Computerprogramm nach Anspruch 8 gespeichert ist.

10. Telematik-Einheit (20), die eingerichtet ist, das Verfahren (10) nach einem der Ansprüche 1 bis 7 auszuführen.

11. Fahrzeug (25) mit einer Telematik-Einheit (20) nach Anspruch 10.

## Claims

1. Method (10) for detecting an impact of a vehicle (25) by means of a measuring device (20) rigidly connected to the vehicle (25), **characterized by** the following features:
- with respect to a plurality of device coordinate axes (X, Y, Z) referred to the measuring device (20), an acceleration of the measuring device (20) is respectively measured (11, 12, 13),
- with respect to a plurality of vehicle coordinate axes (x, y, z) referred to the vehicle (25), an installation position angle (α, β, γ) of the measuring device (20) is respectively calculated and/or measured (14, 15, 16),
- by using the installation position angles (α, β, γ), a vehicle acceleration along the vehicle coordinate axes (x, y, z) is determined and an assessment of the accelerations is performed (17),
- a level of determination of the installation position is determined by the device and used for a weighting of the accelerations, and
- the impact is detected (19) by using the assessment (18, Y) of the vehicle acceleration.

2. Method (10) according to Claim 1,
**characterized by** the following feature:
- at least the accelerations are measured repeatedly, preferably periodically (11, 12, 13).

3. Method (10) according to Claim 1 or 2,
**characterized by** the following features:
- by using the installation position angles (α, β, γ) or a quality index (GZ), with respect to each device coordinate axis (X, Y, Z) among the device coordinate axes (X, Y, Z), a weighting (dz, dx, dy) of the acceleration along the device coordinate axis (X, Y, Z) is adapted, and
- the assessment (17) of the accelerations is carried out as a function of their weightings (dz, dy, dx).

4. Method (10) according to Claim 3,
**characterized by** the following features:
- a vehicle coordinate axis (x, y, z) among the vehicle coordinate axes (x, y, z) is assigned to each device coordinate axis (X, Y, Z) among the device coordinate axes (X, Y, Z), and
- the weighting (dz, dy, dx) of the acceleration along each device coordinate axis (X, Y, Z) is a continuous function of the installation position angle (α, β, γ) or a continuous function of the quality index with respect to the vehicle coordinate axis (x, y, z) assigned to the device coordinate axis (X, Y, Z).

5. Method (10) according to Claim 4,
**characterized by** the following features:
- the device coordinate axes (X, Y, Z) comprise a vertical axis (Z),
- the vehicle coordinate axes (x, y, z) comprise a yaw axis (z), and
- the weighting (dz) of the acceleration along the vertical axis (Z) is correlated with the installation position angle (γ) or the quality index (GZ) with respect to the yaw axis (z).

6. Method (10) according to either of Claims 4 and 5,
**characterized by** the following features:
- the device coordinate axes (X, Y, Z) comprise a transverse axis (Y),
- the vehicle coordinate axes (x, y, z) comprise a pitch axis (y), and
- the weighting (dy) of the acceleration along the transverse axis (Y) is correlated with the installation position angle (β) or the quality index (GZ) with respect to the pitch axis (y).

7. Method (10) according to either of Claims 4 and 5,
**characterized by** the following features:
- the device coordinate axes(X, Y, Z) comprise a longitudinal axis (X),
- the vehicle coordinate axes (x, y, z) comprise a rolling axis (x), and
- the weighting (dx) of the acceleration along the longitudinal axis (X) is correlated with the installation position angle (α) or the quality index (GZ) with respect to the rolling axis (x).

8. Computer program which is configured to carry out the method (10) according to one of Claims 1 to 7.

9. Machine-readable storage medium, on which the computer program according to Claim 8 is stored.

10. Telematics unit (20) which is configured to carry out the method (10) according to one of Claims 1 to 7.

11. Vehicle (25) having a telematics unit (20) according to Claim 10.

## Revendications

1. Procédé (10) de détection d'une collision d'un véhicule (25) au moyen d'un dispositif de mesure (20) relié rigidement au véhicule (25),
**caractérisé par** les caractéristiques suivantes :
- une accélération du dispositif de mesure (20) est mesurée (11, 12, 13) par rapport à plusieurs axes de coordonnées de dispositif (X, Y, Z) liés au dispositif de mesure (20),
- un angle de montage (α, β, γ) du dispositif de mesure (20) est calculé et/ou mesuré (14, 15, 16) par rapport à plusieurs axes de coordonnées de véhicule (x, y, z) liés au véhicule (25),
- une accélération du véhicule le long des axes de coordonnées du véhicule (x, y, z) est déterminée et les accélérations sont évaluées (17) sur la base de l'angle de montage (α, β, γ),
- un degré de détermination de la position de montage est déterminé par le dispositif et utilisé pour pondérer les accélérations et
- la collision est détectée (19) sur la base de l'évaluation (18, Y) de l'accélération du véhicule.

2. Procédé (10) selon la revendication 1,
**caractérisé par** la caractéristique suivante :
- au moins les accélérations sont mesurées (11, 12, 13) de manière répétée, de préférence périodiquement.

3. Procédé (10) selon la revendication 1 ou 2, **caractérisé par** les caractéristiques suivantes :
- une pondération (dz, dx, dy) de l'accélération le long de l'axe de coordonnées de dispositif (X, Y, Z) est adaptée pour chaque axe de coordonnées de dispositif (X, Y, Z) parmi les axes de coordonnées de dispositif (X, Y, Z) sur la base de l'angle de montage (α, β, γ) ou d'un indice de qualité (GZ), et
- l'évaluation (17) des accélérations est effectuée en fonction de leurs pondérations (dz, dy, dx).

4. Procédé (10) selon la revendication 3,
**caractérisé par** les caractéristiques suivantes :
- chaque axe de coordonnées de dispositif (X, Y, Z) parmi les axes de coordonnées de dispositif (X, Y, Z) est associé à un axe de coordonnées de véhicule (x, y, z) parmi les axes de coordonnées de véhicule (x, y, z) et
- la pondération (dz, dy, dx) de l'accélération le long de chaque axe de coordonnées de dispositif (X, Y, Z) est une fonction continue de l'angle de montage (α, β, γ) ou une fonction continue de l'indice de qualité par rapport à l'axe de coordonnées de véhicule (x, y, z) associé à l'axe de coordonnées de dispositif (X, Y, Z).

5. Procédé (10) selon la revendication 4,
**caractérisé par** les caractéristiques suivantes :
- les axes de coordonnées de dispositif (X, Y, Z) comprennent un axe vertical (Z),
- les axes de coordonnées de véhicule (x, y, z) comprennent un axe de lacet (z) et
- la pondération (dz) de l'accélération le long de l'axe vertical (Z) est corrélée à l'angle de position de montage (y) ou à l'indice de qualité (GZ) par rapport à l'axe de lacet (z).

6. Procédé (10) selon l'une des revendications 4 et 5,
**caractérisé par** les caractéristiques suivantes :
- les axes de coordonnées de dispositif (X, Y, Z) comprennent un axe transversal (Y),
- les axes de coordonnées de véhicule (x, y, z) comprennent un axe de tangage (y) et
- la pondération (dy) de l'accélération le long de l'axe transversal (Y) est corrélée à l'angle de montage (β) ou à l'indice de qualité (GZ) par rapport à l'axe de tangage (y).

7. Procédé (10) selon l'une des revendications 4 ou 5,
**caractérisé par** les caractéristiques suivantes :
- les axes de coordonnées de dispositif (X, Y, Z) comprennent un axe longitudinal (X)
- les axes de coordonnées de véhicule (x, y, z) comprennent un axe de roulis (x) et
- la pondération (dx) de l'accélération le long de l'axe longitudinal (X) est corrélée à l'angle de montage (a) ou à l'indice de qualité (GZ) par rapport à l'axe de roulis (x).

8. Logiciel adapté pour mettre en œuvre le procédé (10) selon l'une des revendications 1 à 7.

9. Support de stockage lisible par machine sur lequel le logiciel selon la revendication 8 est stocké.

10. Unité télématique (20) adaptée pour mettre en œuvre le procédé (10) selon l'une des revendications 1 à 7.

11. Véhicule (25) pourvu d'une unité télématique (20) selon la revendication 10.
